# FASCICULE DE BREVET EUROPEEN

(11) **EP 2 105 463 B1**
(45) Date de publication et mention de la délivrance du brevet: **24.07.2013**
(21) Numéro de dépôt: 09159195.8
(22) Date de dépôt: 08.10.2001
(51) Int. Cl.: C09J 123/08, C09J 151/06, C08L 23/02, C08L 23/08, C08G 81/02, C08L 51/06

(54) **Mélanges de copolymères greffes à blocs polyamides et de polyoléfines souples**
Mischungen aus Propfpolymeren mit Polyamidblöcken und weichen Polyolefinen
Mixes of copolymers grafted onto flexible blocks of polyamides and polyolefins

(30) Priorité: 06.10.2000 FR 0012787
(43) Date de publication de la demande: 30.09.2009
(62) Demande divisionnaire de: 01978512.0
(73) Titulaire: ARKEMA FRANCE, 92700 Colombes (FR)
(72) Inventeur: Court, François, 75020, Paris (FR); Hert, Marius, 67680, Epfig (FR); Robert, Patrice, 27470, Serquigny (FR); Baumert, Martin, D-869221, Dossenheim (FR)

(56) Documents cités:
- EP-A- 0 364 390
- EP-A- 0 568 707
- US-A- 3 976 720
- US-A- 5 770 679

## Description

### [Domaine de l'invention]

La présente invention concerne des mélanges comprenant 1 à 100% de copolymères greffés à blocs (co)polyamides et 99 à 0% de polyoléfines souples. Les polyoléfines souples peuvent être par exemple des copolymères de l'éthylène et d'un (meth)acrylate d'alkyle et les copolymères greffés à blocs (co)polyamides sont constitués d'un tronc en polyoléfine sur lequel sont attachés des greffons en polyamide. Plus précisément le copolymère greffé à blocs polyamides est obtenu par exemple par réaction d'un (co)polyamide ayant une extrémité de chaîne terminée par un groupe amine sur une polyoléfine contenant des groupements anhydride d'acide incorporés soit par polymérisation, soit par greffage d'un anhydride d'acide carboxylique insaturé.

### [Le problème technique]

Les polyoléfines souples, de module élastique en flexion inférieur à 100 MPa à 23°C présentent des points de fusion cristalline compris entre 100°C et 60°C et se caractérisent par une chute importante du module élastique, dès que la température se rapproche du point de fusion, ce qui handicape en général leur usage dans un environnement caractérisé par des montées importantes de température comme par exemple l'intérieur d'un habitacle automobile ou une exposition en plein soleil. Ces polyoléfines souples sont par exemple des copolymères de l'éthylène et d'un comonomère tel qu'une alphaoléfine, l'acétate de vinyle ou un (meth)acrylate d'alkyle.

### [L'art antérieur]

Le brevet US 3976720 décrit des copolymères greffés à blocs polyamides et leur utilisation comme compatibilisant dans des mélanges de polyamide et de polyoléfine. On commence par effectuer la polymérisation du caprolactame en présence de la N-hexylamine pour obtenir un PA 6 ayant une extrémité amine et une extrémité alkyle. Puis ce PA 6 est attaché sur un tronc constitué d'un copolymère de l'éthylène et de l'anhydride maleique par réaction de l'anhydride avec l'extrémité amine du PA 6. On obtient ainsi un copolymère greffé à blocs polyamides qui est utilisé à raison de 2 à 5 parties en poids pour compatibiliser des mélanges comprenant 75 à 80 parties de PA 6 et 20 à 25 parties de polyéthylène haute densité (HDPE). Dans ces mélanges le polyéthylène est dispersé sous forme de nodules de 0,3 à 0,5 µm dans le polyamide.

Le brevet US 3963799 est très proche du précédent, on y précise que le module de flexion des mélanges de PA 6, de HDPE et de compatibilisant est de l'ordre de 210000 psi à 350000 psi soit 1400 à 2200 MPa.

Le brevet EP 1036817 décrit des copolymères greffés similaires à ceux décrits dans les brevets US cités ci dessus et leur utilisation comme primaire, liant pour des encres ou des peintures sur un substrat en polyoléfine. Pour ces usages les copolymères sont appliqués en solution dans le toluène.

Le brevet US 5 342 886 décrit des mélanges de polymères comprenant un compatibilisant et plus particulièrement des mélanges de polyamide et de polypropylène. Le compatibilisant est constitué d'un tronc en polypropylène sur lequel sont attachés des greffons en polyamide. On prépare ce compatibilisant à partir d'un polypropylène homopolymère ou copolymère (le tronc) sur lequel on greffe de l'anhydride maleique. Séparément on prépare du polyamide à terminaison monoamine c'est à dire ayant une extrémité amine et une extrémité alkyle. Puis par mélange à l'état fondu le polyamide monoaminé vient se fixer sur le tronc de polypropylène par réaction entre la fonction amine et l'anhydride maleique.

On a maintenant découvert que ces copolymères greffés à blocs polyamides s'organisent en structure à l'échelle nanométrique ce qui leur confère des propriétés de résistance thermo-mécaniques exceptionnelles. D'une façon surprenante, ces propriétés sont maintenues en redispersant ces copolymères greffés à blocs polyamides dans des polyoléfines souples telles que les polymères souples de l'éthylène.

Ainsi quand on désire augmenter la température d'utilisation d'une polyoléfine souple on peut la modifier en y fixant un greffon polyamide. Si le tronc de la polyoléfine souple ne contient pas de site réactif pour la fixation du greffon il faut d'abord l'introduire par greffage sur le tronc. Selon les propriétés recherchées il n'est pas nécessaire de fixer des greffons sur toute la polyoléfine souple mais il suffit de le faire seulement sur une fraction de cette polyoléfine souple [cela se fait insitu]. On peut aussi mélanger cette partie modifiée avec le reste de la polyoléfine souple. On peut aussi, pour augmenter la température d'utilisation d'une polyoléfine souple, y ajouter une autre polyoléfine mais contenant des greffons polyamide. De préférence cette autre polyoléfine doit être compatible avec la polyoléfine souple. Selon la proportion ajoutée cette polyoléfine doit de préférence avoir une souplesse telle que la souplesse du mélange ne soit pas trop modifiée.

### [Brève description de l'invention]

La présente invention concerne un mélange comprenant en poids, le total étant 100 %:
➢ 1 à 100 % d'un copolymère greffé à blocs polyamide constitué d'un tronc en polyoléfine choisi parmi les copolymères éthylène-anhydride maléique et éthylène - (méth)acrylate d'alkyle - anhydride maléique et d'en moyenne au moins un greffon en polyamide dans lequel:
   - les greffons sont attachés au tronc par les restes d'un monomère insaturé (X) ayant une fonction capable de réagir avec un polyamide à extrémité amine,
   - les restes du monomère insaturé (X) sont fixés sur le tronc par copolymérisation depuis sa double liaison,
> 99 à 0 % d'une polyoléfine souple de module élastique en flexion inférieure à 150 MPa à 23°C et présentant un point de fusion cristalline compris entre 60°C et 100°C,
caractérisé en ce que :
- (X) est l'anhydride maléique ;
- la masse molaire des greffons est comprise entre 2000 et 4000 g/mole ;
- il y a en moyenne de 1,3 à 10 moles de X attachées sur le tronc en polyoléfine.

Ces copolymères greffés à blocs polyamides s'organisent en structure à l'échelle nanométrique ce qui leur confère des propriétés de résistance thermo-mécaniques exceptionnelles. Le caractère nanométrique est d'autant plus marqué que la quantité de polyamide par rapport au tronc est dans certaines proportions.

Les mélanges de la présente invention se caractérisent par un plateau de module élastique, au-delà du point de fusion de la polyoléfine souple ce qui se traduit en pratique par une amélioration des propriétés de fluage à chaud et des possibilités d'usage à des températures nettement supérieures à celles de la polyoléfine souple utilisée seule. De telles propriétés sont particulièrement recherchées en gainage de câble, dans les pièces d'aspect pour habillage • intérieur des voitures telles que les peaux thermogainées, thermoformées • calandrées ou faites par Slush molding, dans les bâches et les géomembranes exposées à l'extérieur ainsi que dans les adhésifs.

La présente invention concerne aussi un adhésif constitué essentiellement des mélanges précédents du copolymère greffé et de la polyoléfine souple. De préférence le mélange est réduit en poudre puis cette poudre est disposée entre les substrats à coller. On peut déposer par exemple la poudre sur l'un ou l'autre des substrats, ou même sur les deux substrats, puis on les presse l'un sur l'autre tout en chauffant suffisamment pour que la poudre fonde. Le collage est obtenu après refroidissement.

La présente invention concerne aussi des films qu'on peut obtenir par extrusion des mélanges précédents du copolymère greffé et de la polyoléfine souple.

La présente invention concerne aussi des bâches ou des géomembranes qu'on peut obtenir par extrusion des mélanges précédents du copolymère greffé et de la polyoléfine souple. Ces bâches ou geomembranes sont avantageusement constituées d'au moins une couche des mélanges précédents associés à un support. De préférence on les obtient par extrusion couchage sur un support qui peut être un non tissé, un tissu par exemple en PET ou une grille en PET.

La présente invention concerne aussi tous les produits qu'on obtient par calandrage, en effet les mélanges précédents du copolymère greffé et de la polyoléfine souple se transforment très facilement par ce procédé et ne collent pas aux rouleaux de la machine de calandrage.

La présente invention concerne aussi des câbles électriques ou de télécommunications comprenant une couche de protection à base des mélanges précédents du copolymère greffé et de la polyoléfine souple. Avantageusement la couche utilisée dans les câbles électriques contient aussi un ignifugeant tel que par exemple l'hydroxyde de magnésium.

La présente invention concerne aussi l'utilisation des mélanges précédents du copolymère greffé et de la polyoléfine souple sous forme de poudre dans le procédé "slush molding" ainsi que les objets obtenus. Le terme "slush molding" utilisé par l'homme de métier désigne un procédé de moulage par écoulement libre de poudre sur un moule chaud (appelé ci-après procédé slush molding). Le slush molding est utilisé pour la fabrication de peaux pour planches de bord, panneaux de portes et consoles dans le domaine automobile. La poudre est mise en contact du moule chaud par exemple par la technique de l'écoulement libre, par fusion la poudre forme une peau. Ces peaux ont un toucher très doux et n'ont pas de contraintes résiduelles ce qui permet d'éviter pendant le vieillissement de la peau le risque d'apparition de craquelures provoquées par des contraintes résiduelles se relaxant. L'invention concerne aussi les objets obtenus par ce procédé de slush molding et rotomoulage

### [Description détaillée de l'invention]

**S'agissant de la polyoléfine souple** c'est un homopolymère d'une oléfine ou un copolymère d'au moins une alphaoléfine et d'au moins un autre monomère copolymérisable, pourvu bien sûr que les conditions de module et de point de fusion cristalline soient respectés.

Avantageusement la polyoléfine souple est choisie parmi les polyéthylènes homo- ou copolymères.

A titre de comonomères, on peut citer
- les alpha-oléfines, avantageusement celles ayant de 3 à 30 atomes de carbone.

Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène. Ces alpha-oléfines peuvent être utilisées seules ou en mélange de deux ou de plus de deux.
- les esters d'acides carboxyliques insaturés tels que par exemple les (méth)acrylates d'alkyle, les alkyles pouvant avoir jusqu'à 24 atomes de carbone.

Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.
- les esters vinyliques d'acides carboxyliques saturés tels que par exemple l'acétate ou le propionate de vinyle.
- les époxydes insaturés.

Des exemples d'époxydes insaturés sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate.
- les acides carboxyliques insaturés, leurs sels, leurs anhydrides.

Des exemples d'anhydrides d'acide dicarboxylique insaturé sont notamment l'anhydride maléique, l'anhydride itaconique, l'anhydride citraconique, l'anhydride tétrahydrophtalique.
- les diènes tels que par exemple le 1,4-hexadiène.
La polyoléfine souple peut comprendre plusieurs comonomères.

A titre d'exemple on peut citer :
- le polyéthylène basse densité (LDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthamides peuvent aussi être utilisés.
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%
- les copolymères éthylène (méth)acrylate d'alkyle-anhydride maléique obtenus par copolymérisation des trois monomères, les proportions de (méth)acrylate étant comme les copolymères ci-dessus, la quantité d'anhydride maléique étant jusqu'à 10% et de préférence 0,2 à 6% en poids.
- les copolymères éthylène-acétate de vinyle-anhydride maléique obtenus par copolymérisation des trois monomères, les proportions étant les mêmes que dans le copolymère précédent.

A titre d'exemple on peut citer les copolymères souples de l'éthylène tels que les copolymères obtenus par voie radicalaire sous haute pression de l'éthylène avec de l'acétate de vinyle, des esters (meth)acryliques de l'acide (meth)acrylique et d'un alcool ayant de 1 à 24 atomes de carbone et avantageusement de 1 à 9, les terpolymères radicalaires utilisant en plus un troisième monomère choisi par les monomères insaturés copolymérisables avec l'éthylène tels que l'acide acrylique, l'anhydride maléique, le méthacrylate de glycidyle. Ces copolymères souples peuvent aussi être des copolymères de l'éthylène avec des alfa-oléfines de 3 à 8 atomes de carbone tels que les EPR, les copolymères de très basse densité de l'éthylène avec du butène de l'hexène ou de l'octène de densité comprise entre 0.870 et 0.910 g/cm³ obtenues par catalyse metallocène ou Ziegler - Natta. Par polyoléfines souples , nous entendons également les mélanges de 2 ou plusieures polyoléfines souples.

L'invention est particulièrement utile pour les copolymères de l'éthylène et des (méth)acrylates d'alkyle. L'alkyle peut avoir jusqu'à 24 atomes de carbone. De préférence les (méth)acrylates sont choisis parmi ceux cités plus haut. Ces copolymères comprennent avantageusement jusqu'à 40 % en poids de (méth)acrylate et de préférence 3 à 35 %. Leur MFI est avantageusement compris entre 0,1 et 50 (à 190°C - 2,16 kg).

Avantageusement le module de flexion est compris entre 5 et 150.

**S'agissant du copolymère greffé à blocs polyamides** il peut être obtenu par réaction d'un polyamide à extrémité amine avec les restes d'un monomère insaturé X fixé copolymerisation sur un tronc en polyoléfine.

**Ce monomère X** est l'anhydride maleique.

**S'agissant du tronc en polyoléfine** il est choisi parmi les copolymères éthyléne-anhydride maleique et éthylène-(méth)acrylate d'alkyle-anhydride maleique.

En ce qui concerne les (méth)acrylates d'alkyle, les alkyles peuvent avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,

On utilise avantageusement les copolymères éthylène-anhydride maléique et éthylène - (méth)acrylate d'alkyle - anhydride maléique qui comprennent de 0,2 à 10 % en poids d'anhydride maléique, de 0 à 40 % et de préférence 5 à 40 % en poids de (méth)acrylate d'alkyle. Leur MFI est compris entre 5 et 100 (190°C - 2,16 kg). La température de fusion est comprise entre 60 et 100°C.

Il y a en moyenne de 1,3 à 10 moles de X par chaîne attachées sur le tronc en polyoléfine et mieux de 1,3 à 7. L'homme de métier peut determiner facilement par analyze IRTF le nombre de ces moles X.

**S'agissant du polyamide à extrémité amine** on entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que le caprolactame, oenantholactame et lauryllactame ;
- d'un ou plusieurs sels ou mélanges de diamines telles l'hexaméthylène-diamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique :
- ou des mélanges de plusieurs monomères ce qui conduit à des copolyamides.

On peut utiliser des mélanges de polyamides ou des copolyamides. On utilise avantageusement le PA 6, le PA 11, le PA 12, le copolyamide à motifs 6 et motifs 11 (PA 6/11), le copolyamide à motifs 6 et motifs 12 (PA 6/12), et le copolyamide à base de caprolactame, hexaméthylènediamine et acide adipique (PA 6/6-6). L'avantage des copolyamides est qu'on peut ainsi choisir la température de fusion des greffons.

Avantageusement les greffons sont des homopolymères constitués de restes de caprolactame, d'acide amino-11-undecanoïque ou de dodecalactame ou des copolyamides constitués de restes choisis parmi au moins deux des trois monomères précédents.

Le degré de polymérisation peut varier dans de larges proportions, selon sa valeur c'est un polyamide ou un oligomère de polyamide. Dans la suite du texte on utilisera indifferemment les deux expressions pour les greffons.

Pour que le polyamide ait une terminaison monoamine il suffit d'utiliser un limiteur de chaîne de formule 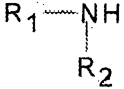 dans laquelle :
R₁ est l'hydrogène ou un groupement alkyle linéaire ou ramifié contenant jusqu'à 20 atomes de carbone,
R₂ est un groupement ayant jusqu'à 20 atomes de carbone alkyle ou alcenyle linéraire ou ramifié, un radical cycloaliphatique saturé ou non, un radical aromatique ou une combinaison des précédents. Le limiteur peut être par exemple la laurylamine ou l'oleylamine.

Le polyamide à extrémité amine a une masse molaire comprise entre 2000 et 4000g/mole.

Les monomères amino-acides ou lactames préférés pour la synthèse de l'oligomère monoaminé selon l'invention sont choisis parmi le caprolactame, l'acide amino-11-undécanoïque ou le dodécalactame. Les limitateurs monofonctionnels de polymérisation préférés sont la laurylamine et l'oléylamine. La polycondensation définie ci-dessus s'effectue selon les procédés habituellement connus, par exemple à une température comprise en général entre 200 et 300 °C, sous vide ou sous atmosphère inerte, avec agitation du mélange réactionnel. La longueur de chaîne moyenne de l'oligomère est déterminée par le rapport molaire initial entre le monomère polycondensable ou le lactame et le limitateur monofonctionnel de polymérisation. Pour le calcul de la longueur de chaîne moyenne, on compte habituellement une molécule de limitateur de chaîne pour une chaîne d'oligomère.

L'addition de l'oligomère monoaminé de polyamide sur le tronc de polyoléfine contenant X s'effectue par réaction d'une fonction amine de l'oligomère avec X. Avantageusement X porte une fonction anhydride ou acide, on crée ainsi des liaisons amides ou imides.

On réalise l'addition de l'oligomère à extrémité amine sur le tronc de polyoléfine contenant X de préférence à l'état fondu. On peut ainsi, dans une extrudeuse, malaxer l'oligomère et le tronc à une température généralement comprise entre 230 et 250 °C. Le temps de séjour moyen de la matière fondue dans l'extrudeuse peut être compris entre 15 secondes et 5 minutes, et de préférence entre 1 et 3 minutes. Le rendement de cette addition est évalué par extraction sélective des oligomères de polyamide libres c'est-à-dire ceux qui n'ont pas réagi pour former le copolymère greffé à blocs polyamides final.

La préparation de tels polyamides à extrémité amine ainsi que leur addition sur un tronc de polyoléfine contenant X est décrite dans les brevets US 3976720, US 3963799, US 5342886 et FR 2291225.

Les copolymères greffés à blocs polyamides de la présente invention sont caracterisés par une organisation nano structurée avec des lamelles de polyamide d'épaisseur comprise entre 10 et 50 nanomètres.

Avantageusement la proportion de copolymère greffé à blocs polyamides est de 5 à 50% pour respectivement 95 à 50% de polyoléfine souple.

Les mélanges de l'invention ont une très bonne résistance au fluage à des températures au moins égales à 80°C et pouvant aller jusqu'à 130°C, c'est à dire qu'ils ne presentent pas de rupture sous 25 kPa.

Les mélanges de l'invention peuvent être préparées par mélange à l'état fondu dans des extrudeuses (mono ou bi vis), des malaxeurs BUSS, des mélangeurs BRABENDER et en général les dispositifs habituels de mélange des thermoplastiques et de préférence les extrudeuses bivis. Les mélanges de l'invention peuvent comprendre aussi des agents fluidifiants tels que de la silice, de l'éthylène-bis -amide, du stearate de calcium ou du stearate de magnesium. Ils peuvent aussi comprendre des antioxydants, des anti U.V., des charges minérales et des pigments de coloration.

Les mélanges de l'invention peuvent être préparés en une étape dans une extrudeuse. Dans les premières zones on introduit le tronc contenant X (par exemple un copolymère éthylène-(meth)acrylate d'alkyle-anhydride maléique), le polyamide à extrémité amine puis quelques zones plus loin la polyoléfine souple. On peut aussi introduire tous les ingrédients mélangés par dry blend dans la première zone de l'extrudeuse.

### [Exemples]

### Exemple 1 (comparatif)

Un terpolymère d'éthylène, de module de flexion 30 MPa, de masse molaire moyenne en poids M_{w} 95000 g/mole avec 28% en poids d'acrylate d'éthyle et 1.2% en poids d'anhydride maléique copolymérisé de melt index égal à 6 g/10 min (sous 2,16 kg /190°C) est malaxé sur une extrudeuse bi-vis co-rotative Leistritz® équipée de plusieurs zones de malaxage, ayant un profil de température entre 180 et 220°C, avec un polycaprolactame de masse moléculaire de 2500 g/mole à terminaison amine, synthétisé selon la méthode décrite dans le brevet US 5342886. Ce terpolymère contient en moyenne 1 anhydride par chaîne. Les proportions introduites dans l'extrudeuse sont telles que le rapport polyoléfine du tronc / polyamide à terminaison amine est en poids de 80/20.

Le produit obtenu est constitué, en poids, de 50% du terpolymère sur lequel est attaché un greffon polyamide, de 14% de PA 6 à terminaison amine et de 36% du terpolymère.

Le produit ainsi réalisé est analysé par microscopie électronique par transmission, en révélant la phase polyamide par un traitement consistant à faire des coupes ultrafines puis à les traiter dans une solution aqueuse d'acide phosphotungstique pendant 30 min à 60°C; le PA apparaît en sombre. La morphologie de cet alliage est caractérisée par des particules de polyamide de taille moyenne comprise ente 1 et 3 microns. Les propriétés thermomécaniques de ce produit sont médiocres et il casse au bout d'un temps inférieur à 1 min sous une contrainte de 25 K Pa à 150°C.

### Example 2

On reproduit une réaction de greffage en extrudeuse dans les conditions de l'exemple 1, avec le polyamide à extrémité amine de l'exemple 1 et un terpolymère éthylène-acrylate d'éthyle-anhydride maléique de M_{w} 50000 ayant une composition pondérale respective de 77/20/3 de comonomères , un point de fusion de 76°C, un module de flexion de 30 MPa et un melt flow index de 70 g/10 min (sous 2,16 kg /190°C). Ce terpolymère contient 2,3 anhydride par chaîne. Les proportions introduites dans l'extrudeuse sont telles que le rapport polyoléfine du tronc / polyamide à terminaison amine est en poids de 80/20 et le rapport des fonctions amine par rapport aux fonctions anhydride maléique de 0.35. L'analyse par MEB montre que le polymère obtenu est organisé en lamelles ayant une épaisseur de l'ordre de 10 nm. Ce polymère se caractérise par un plateau de module élastique compris entre 9 et 3 MPa , entre 80° et 180°. Ce polymère a un allongement de 8% en test de fluage sous une contrainte de 50 K Pa à 180°.

L'analyse du polymère obtenu montre qu'il contient (i) 50% en poids du terpolymère sur lequel sont attachés des greffons de polyamide, (ii) 45% de terpolymère, de module de flexion 30 MPa, n'ayant pas réagi avec le polyamide à extrémité amine et (iii) 5% de PA 6 à terminaison amine.

### Exemple 3

On reproduit une réaction de greffage selon l'exemple 1 avec un terpolymère radicalaire éthylène / acrylate de butyle / anhydride maléique de M_{w} 105000 de composition respective en poids 80 / 17 / 3 , de point de fusion égal à 95°C, de module de flexion 60 MPa et de MFI de 5 g/10 min (sous 2,16 kg /190°C) et un PA 6 monoaminé de masse moléculaire 2400 g / mole. Ce terpolymère contient 4,8 anhydride par chaîne. Les proportions introduites dans l'extrudeuse sont telles que le rapport polyoléfine du tronc / polyamide à terminaison amine est en poids de 80/20.

Le polymère obtenu est nano-structuré. Il se caractérise par un plateau élastique compris entre 10 et 8 MPa entre 100°C et 180°C. Ce polymère a un allongement de 5% en test de fluage sous une contrainte de 200 K Pa à 120°. Ce polymère a un allongement de 8% en test de fluage sous une contrainte de 50 K Pa à 180°C.

L'analyse de ce polymère montre qu'il contient plus de 50% du terpolymère sur lequel sont attachés des greffons de polyamide par tronc (le terpolymère) (ii) les autres 50% étant du terpolymère, de module de flexion 60 MPa, n'ayant pas réagi avec le polyamide à extrémité amine et un peu de PA 6 à terminaison amine.

### Exemple 4

Des polyoléfines souples sont malaxées sur une extrudeuse bi-vis, avec un profil thermique compris entre 180 et 220°, avec le polymère nano-structuré obtenu à l'exemple 3. On teste ensuite la résistance au fluage de ces polyoléfines modifiées à différentes températures et sous différentes charges. L'analyse du comportement de ces matériaux est donnée dans le tableau 1. On y montre la tenue au fluage des polyoléfines modifiées avec un copolymère greffé à blocs PA 6 . Les compositions sont en poids.
- L'Evatane® 28.05 est un copolymère EVA ayant une teneur en acétate de vinyle en poids de 28% et un MFI (190°C/2,16 kg) de 5 g/10 min.
- Le Lotryl® 30 BA 02 est un copolymère d'éthylène avec de l'acrylate de n-butyle à une teneur pondérale d'acrylate de 30% et ayant un MFI de 2 g/10 min (190°C/2,16 kg).

Dans la colonne "teneur" du tableau 1 on indique respectivement la quantité d' Evatane® ou de Lotryl® et du polymère obtenu à l'exemple 3. Ce polymère de l'ex 3 étant lui même un mélange contenant 50% de terpolymère sur lequel sont attachés des greffons PA, du terpolymère, du terpolymère n'ayant qu'un greffon et un peu de PA 6 à extrémité amine.

**Tableau 1**

| Composition | Teneur | Température °C | Contrainte K Pa | Allongement (%) | Temps |
|---|---|---|---|---|---|
| Evatane 2805 | 100/0 | 120 | 25 | Rupture | 36 s |
| | 100/0 | 100 | 25 | Rupture | 70 s |
| | 100/0 | 80 | 25 | Rupture | 2 min30 |
| | 70/30 | 120 | 25 | Rupture | 120 s |
| | 70/30 | 100 | 25 | Rupture | 4 min30 |
| | 70/30 | 80 | 25 | 30% | >20 min |
| | 50/50 | 80 | 25 | 10% | >20 min |
| | | | | | |
| Lotryl 30 BA 02 | 100/0 | 120 | 25 | Rupture | 60 s |
| | 100/0 | 100 | 25 | Rupture | 90 s |
| | 100/0 | 80 | 25 | 225% | >20 min |
| | 80/20 | 100 | 25 | rupture | 4 min |
| | 80/20 | 80 | 25 | 50% | >20 min |
| | 70/30 | 120 | 25 | 80% | >20 min |
| | 70/30 | 100 | 25 | 70% | >20 min |
| | 70/30 | 80 | 25 | 15% | >20 min |
| | 50/50 | 120 | 100 | 30% | >20 min |

### Exemple 5

### I) Caractéristiques des produits utilisés

1.1) Tronc en polyoléfine comprenant de l'anhydride maléique. Le lotader® utilisé pour la synthèse du lotader greffé PA est un terpolymère éthylène-ester acrylique-anhydride maléique dont les caractéristiques sont :

| Nom du produit | %massique théorique en MAH | %massique théorique en BA | MFI (2.16Kg/190°C) théorique | Densité (g/cm³) | Pt. de fusion (°C) |
|---|---|---|---|---|---|
| LOTADER 3410 | 3.3 à 3.5 | 37 | 3 à 6 | 0.9 | 95 |

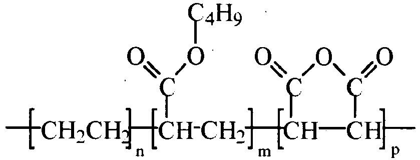

-1.2) Caractéristiques de l'oligomère de polyamide à extrémité amine: L'oligomère utilisé est du polyamide 6 mono NH2 dont la formule est :

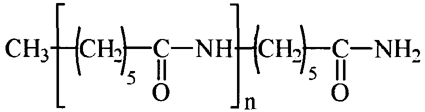

| | Masse Moléculaire |
|---|---|
| PA6 mono NH2 | 2445 |

1.3) Caractéristiques de la polyoléfine souple (Lotryl®) Le lotryl® utilisé est un copolymère éthylène-acrylate de butyle dont les caractéristiques sont :

| Nom du Produit | %massique théorique en BA | MFI (2.16Kg/190°C) théorique | Densité (g/cm3) | Pt. de fusion (°C) |
|---|---|---|---|---|
| LOTRYL 30 BA 02 | 30 | 2 | 0.93 | 78 |

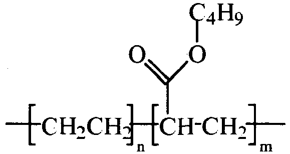

### II) Partie expérimentale :

A)Procédé en 2 étapes, on effectue d'abord la fixation du polyamide à extrémité amine sur le tronc puis on dilue dans la polyoléfine souple.
A1) Etape de synthèse du lotader greffé PA monoNH2 (fixation du polyamide à extrémité amine sur le tronc). La fixation est réalisée sur extrudeuse Leistritz dans les conditions suivantes (en poids) :
80% de lotader® 3410 et 20% de PA6 monoNH2 sont mélangés par Dry blend et introduits dans l'extrudeuse:

| Profil thermique zones de 1 à 9 | 200-210-220-220-220-210-200-180-180°C |
|---|---|
| Vitesse de vis | 75 trs/mn |
| Débit | 10 Kg/h |

A2) Etape de dilution du lotader greffé PA monoNH2 dans le lotryl®. La dilution dans le lotryl 30BA02 est réalisée sur extrudeuse Leistritz à 220°C, on utilise en poids 50 parties du produit obtenu à l'étape A1 et 50 parties de Lotryl®.
B)Procédé en 1 étape, on effectue la fixation du polyamide à extrémité amine sur le tronc et simultanement la dilution dans la polyoléfine souple dans l'extrudeuse. Le greffage et la dilution sont réalisés en même temps sur extrudeuse Leistritz dans les conditions suivantes (en poids):
40% de lotader® 3410, 10% de PA6 monoNH2 et 50% de lotryl® 30BA02 sont mélangés par Dry blend et compoundés:

| Profil thermique zones de 1 à 9 | 200-210-220-220-220-210-200-180-180°C |
|---|---|
| Vitesse de vis | 75 trs/mn |
| Débit | 10 Kg/h |

### III) Evaluation des propriétés thermomécaniques des compounds : Comparaison des compounds en une et deux étapes.

A) Propriétés thermomécaniques des compounds: Résistance au fluage (méthode interne).
   Cette propriété est évaluée par une mesure de tenue au fluage à 100°C et 120°C sous différentes charges. Des éprouvettes IFC (institut français du caoutchouc) sont découpées dans des plaques de 2 mm d'épaisseur préparées par compression sur presse Enerpac® Les plaques de lotader greffé PA ainsi que les produits dilués sont préparés à 240°C. L'éprouvette doit tenir sous charge de 1 bar à 100°C et 0,5 bar à 120°C pendant au moins 20mn
B) Propriétés mécaniques des compounds: Les propriétés mécaniques sont évaluées par la mesure de la contrainte et de l'allongement à la rupture (haltères ISO 527, vitesse 100mm /mn).

Les résultats sont reportés sur le tableau 2 suivant.

| Produit | Fluage à 100°C sous 100 kPa | Fluage 120°C sous 50 kPa | Fluage a 120°C sous 100 kPa | Contrainte et allongement à la rupture |
|---|---|---|---|---|
| Lotader 3410 | Fluage à 2 mn | Fluage à 70 sec | Fluage | 10 MPa |
| | Sous 25 kPa | Sous 25 kPa | | 700% |
| Lotryl 30BA02 | > Fluage à 90 sec | Fluage à 60 sec | Fluage | 6 MPa |
| | Sous 25 kPa | Sous 25 kPa | | 850% |
| Obtenu en 2 étapes | > 20 mn | > 20 mn | > 20 mn | 102+/-06MPa |
| | Allongement 30% | Allongement 15% | Allongement 30% | 501 +/- 20 % |
| Obtenu en 1 étape | > 20 mn | > 20 mn | > 20 mn | 11.0 +/- 1.1 MPa |
| | Allongement 25% | Allongement 20% | Allongement 30% | 541 +/-37% |

### IV) Résultats de l'évaluation de la morphologie.

Des coupes ultrafines ont été effectuées à -100°C puis traitées dans une solution d'acide phosphotungstique à 2% dans l'eau pendant 30 mn à 60°C avant d'être examinées par microscopie électronique à transmission. La différence entre les produits obtenus en 1 ou 2 étapes est faible: on obtient dans les deux cas une dispersion homogène du LOTADER comprenant les greffons en polyamide, le procédé en une étape conduisant à une structuration plus visible de ce dernier.

### Exemple 6 (Adhésif)

On a utilisé les produits suivants :
Le **LOTADER**® **7500** est un terpolymère éthylène - acrylate d'éthyle - anhydride maléique

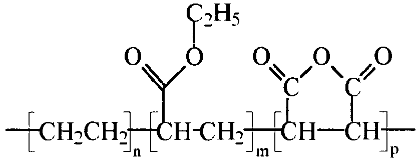

**Propriétés du LOTADER 7500 :**

| %mass. en MAH (anhydride maleique) | %mass. en acrylate d'éthyle | IF^{a}) indice de fluidité (melt index) | Mₙ | M_{w} | M_{w}/Mₙ | Shore A | Pt. de fusion (°C) |
|---|---|---|---|---|---|---|---|
| 2,9 | 17,5 | 70 | 8000 | 50000 | 6,25 | 82 | 83 |

| | | | | | | | |
|---|---|---|---|---|---|---|---|
| a) (2.16Kg/190°C) | | | | | | | |

**LOTADER-g-PA6/11** : c'est le LOTADER 7500 greffé avec 20 % de copolyamide 6/11 monoNH₂ préparé par extrusion sur une extrudeuse LEISTRITZ. Le copolyamide 6/11 a une composition de 55/45 (caprolactame/amino-11-undécanoïque), une Mn=3200 g/mole et est mono-NH₂ terminé.

**Propriétés du LOTADER 7500 greffé PA6/11 (7500-6/11) :**

| %mass. En PA6/11 | lF^{a)} | CR (MPa) Contrainte à la rupture | AR (%) Allongement à la rupture | Point de Fusion (°C) |
|---|---|---|---|---|
| 20 | 9 | 13 | 400 | 83, 151 |

| | | | | |
|---|---|---|---|---|
| (2.16Kg/190°C) | | | | |

Les deux produits ont été cryobroyés.
Les essais ont été effectués sur un appareillage de saupoudrage.
Trois types de support ont été testés :
- Moquette PP sur feuille d'aluminium avec renforcement polyester
- Non-tissé gris sur mousse PE
- Non-tissé gris sur feutre blanc.

La moquette PP sur feuille d'aluminium a été choisie entre autre pour sa tenue thermique afin de pouvoir effectuer des tests de tenue thermique à 120 °C.
Le poids d'application était fixé à 20 g/m³ et la température de la presse de fixation était variée de 100, 120, 140, 160, 180 et 200°C. Un essai avec un collage par vapeur a aussi été effectué.
Dans les tableaux suivants les essais effectués sont listés. L'adhésion est jugée qualitativement (le signe - indique un mauvais résultat, le signe + indique un bon résultat, ++ un meilleur résultat etc..).
Collage : Moquette PP sur feuille d'aluminium avec renforcement polyester

| Presse 15 s/ 0,35 bar | Lotader 7500 | Lotader 7500 greffé coPA 6/11 |
|---|---|---|
| 100°C | ++ | |
| 120°C | ++ | |
| 140°C | ++ | + |
| Tenue thermique (120°C) | Décollage après 9 min | Pas de décollage |

Collage : Non-tissé gris sur mousse PE

| Presse 15 s/ 0,35 bar | Lotader 7500 | Lotader 7500 greffé coPA 6/11 |
|---|---|---|
| 100°C | - | |
| 120°C | | - |
| 140°C | ++ | + |

Collage : Non-tissé gris sur feutre blanc

| Presse 15 s/ 0,35 bar | Lotader 7500 | Lotader 7500 greffé coPA 6/11 |
|---|---|---|
| 100°C | ++ | |
| 120°C | ++ | - |
| 140°C | ++ | + |
| 160°C | | ++ |
| 180°C | | ++ |
| 200°C | | ++ |

### Exemple 7 (Bâches)

### I - CARACTERISTIQUES DES PRODUITS UTILISES :

### I.1 - Caractéristique de la base Lotader utilisée pour le greffage :

C'est un terpolymère éthylène-acrylate de butyle -anhydride maléique à 20% en poids d'acrylate de butyle dont les caractéristiques sont :

**(IF est l'indice de fluidité ou Melt Index)**

| Nom du produit | %massiqu e théorique en MAH | IF (190°C /2.16Kg) théorique | IF (190°C /2.16Kg) mesure | IF (190°C /5Kg) mesuré | IF (230°C /216Kg) mesuré | IF (230°C /5Kg) mesuré | Densité (g/cm3) | Pt de fusion (°C) | Mn |
|---|---|---|---|---|---|---|---|---|---|
| Lotader 3410 | 3.1 | 5 | 6.8 | 25.6 | 18.57 | 61.5 | 0.940 | 95 | 23000 |

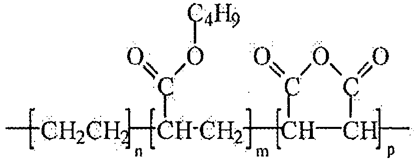

### I.2 - Caractéristiques de l'oligomère utilisé

L'oligomère utilisé est un polyamide 6 mono NH2 de formule developpée:

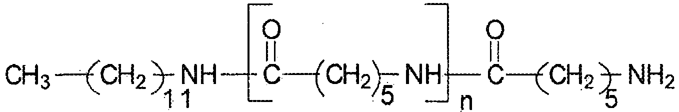

Ce prépolymère possède une masse moléculaire de 2500 g/mole.

### I.3 - Caractéristiques des Lotryl utilisés pour la dilution des Lotader greffé PA:

Ce sont des copolymères éthylène-acrylate de méthyle ou de butyle dont les caractéristiques sont :

| Nom du produit | %massique théorique en MA ou BA | IF (190°C/2.16Kg) théorique | IF (230°C/2.16Kg) mesuré | IF (230°C/5Kg) mesuré | Densité (g/cm3) | Pt. de fusion (°C) |
|---|---|---|---|---|---|---|
| Lotryl 18 MA 02 | 18 % MA | 2 | - | - | | 87 |
| Lotryl 30 BA 02 | 30 % BA | 2 | 4.8 | 14.8 | 0.930 | 78 |
| Lotryl 17 BA07 | 17% BA | 7 | | | | |

| | | | | | | |
|---|---|---|---|---|---|---|
| MA= acrylate de méthyle BA=acrylate de butyle | | | | | | |

### II - Résultats

### II.I - Preparation des produits

### II.I.I - MODE OPERATOIRE-conditions générales de l'extrusion :

L'extrudeuse utilisée pour la fabrication des greffés et des dilutions est une LEISTRITZ modèle LSM 30.34 double vis co-rotatives.

### Conditions de l'extrusion :

• profil de vis : G01
• eau sur culasse, dégazage en zone 7 et refroidissement à l'eau.
• débit total : 15 à 18 Kg/h.
• vitesse de vis : 100 à 125 tr/min.
• L'introduction des réactifs se fait une introduction séparée (1 pour la poudre de PA 6 et une pour les ou le mélange de granulés).
• Les profils de température utilisés sont :

| profil | Z1 | Z2 | Z3 | Z4 | Z5 | Z6 | Z7 | Z8 | Z9 |
|---|---|---|---|---|---|---|---|---|---|
| autres exemples | 200°C | 210°C | 230°C | 240°C | 240°C | 220°C | 210°C | 200°C | 180°C |
| exemples avec Lotader greffé PA | 200°C | 220°C | 240°C | 240°C | 240°C | 240°C | 220°C | 200°C | 180°C |

• La mise en condition de la machine se fait durant 5 minutes sans incident. La prise de l'échantillon se fait après celle-ci.
• Le conditionnement final des produits est réalisé en sac étanche en aluminium référencés après un étuvage d'une nuit à 70°C sous vide.

### ii.ii - Résultats de l'evaluation des compounds:

Propriétés mécaniques des matériaux sur plaques compressées.

Dans le tableau 3410-6/ désigne le Lotader 3410 greffé PA 6.

| | PVC | PP/EDPM | 30BA02 | 17BA07 | 18MA02 | 3410-6/30BA02 en proportions 30/70 (poids) | 3410-6/30BA02 en proportions 50/50 (poids) | 3410-6/18MA02 en proportions 50/50 (poids) | 3410-6 |
|---|---|---|---|---|---|---|---|---|---|
| Contrainte à la rupture (MPa) | 16,0 | 13,7 | 6 | 13 | 15 | 8,2 | 10,2 | 14,0 | 16,5 |
| Allongement à la rupture (%) | 250 | 590 | 850 | 800 | 700 | 520 | 500 | 620 | 460 |
| Module en flexion (MPa) | 20 | 46¹⁾ | 9 | 40²⁾ | 50²⁾ | 29¹⁾ | 44¹⁾ | | 91¹⁾ |
| Shore A | 75 | p.m. | 75 | | | 85 | 90 | 93 | 95 |
| Shore D | 25. | p.m. | | 33 | 25 | 28 | 30 | 37 | 39 |
| Densité (g/cm³) | | p.m. | 0.93 | 0.94 | 0,94 | | | | 0,971 |
| MFI 230°C/2,16kg | 60 | p.m. | 4.8 | p.m. | p.m. | 5,0 | 3,9 | 4,0 | 1,5 |
| Pt de fusion en °C | | | 78 | 91 | 87 | | | | |
| MFI 230°C/5kg | p.m. | p.m. | 14.8 | p.m. | p.m. | 21 | 19 | 20 | 10 |

| | | | | | | | | | |
|---|---|---|---|---|---|---|---|---|---|
| 1) déterminé par DMA : E' =σ/ε x cos(δ) /25°C ; 2) déterminé par la norme DIN53457 (ASTM D790) p.m. = pas mesuré | | | | | | | | | |

### Propriétés thermomécaniques des matériaux sur plaques compressées ou injectées

### Plaques compressées

| PRODUIT | Fluage (100°C/0,25 bar) Allongement (%) | Fluage (120°C/0,5 bar) Allongement (%) | Fluage (140°C/0,5 bar) Allongement (%) |
|---|---|---|---|
| PP/EDPM | 0 | 0 | ∞ |
| PVC | | 20 | ∞ |
| 17BA07 | ∞ | ∞ | ∞ |
| 18MA02 | ∞ | ∞ | ∞ |
| 30BA02 | ∞ | ∞ | ∞ |
| 3410-6/30BA02 30/70 | 70 | ∞ | ∞ |
| 3410-6/30BA02 50/50 | 5 | 15 | 25 |
| 3410-6/18BA02 50/50 | 5 | 10 | 35 |
| 3410-6 | 0 | 0 | 3 |

L'allongement est mesuré après 15 min.

### Comparaison de la tenue thermique par rapnort au PVC/PP/EPDM :

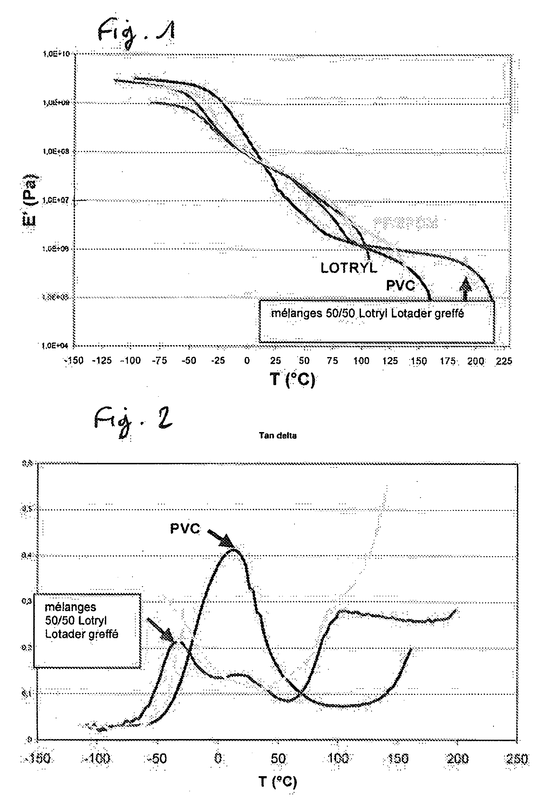

La figure 1 montre le module d'élasticité par rapport à la température pour les mélanges 50/50 de LOTRYL 30BA02 et de Lotader 3410 greffé PA, le PVC et PP/EPDM : on s'aperçoit, qu'à partir de 140 °C le module de conservation des mélanges 50/50 de LOTRYL 30BA02 et de Lotader 3410 greffé PA est supérieur a celui des produits PVC et PP/EPDM. En plus, en regardant la tangente delta par rapport à la température, (figure 2) on voit que les propriétés à froid des mélanges 50/50 de LOTRYL 30BA02 et de Lotader 3410 greffé PA sont supérieures aux autres produits PVC et PP/EPDM.

### II.II Préparation et évaluation des bâches

Le couchage a été effectué sur SAMAFOR® 4EX Plusieurs supports on été utilisés : grille PET, non-tissé PP et tissu PET. Le test de l'étirabilité a montré que jusqu'à 100m/min le produit est extrudable. Des feuilles 2x100 g/m² à 30-30 m/min ont été préparées.

La mise en oeuvre et l'adhésion des mélanges 50/50 de LOTRYL 30BA02 et de Lotader 3410 greffé PA sont comparable à LOTRYL.

### Exemple 8 (Calandrage)

On utilise Le mélange 50/50 de LOTRYL 30BA02 et de Lotader 3410 greffé PA de l'exemple précédent ses caracteristiques sont:

| | |
|---|---|
| Contrainte a la rupture en MPa | 8.6 |
| Allongement à la rupture en % | 630 |
| Shore A | 91 |
| Shore D | 35 |
| MFI 230°C72 16 kg | 4 |
| Tenue au fluage à 120°C sous 0.5 bar | > 15 mn avec un allongement de 15% |
| E' (120°C) en MPa | 1.08 |
| E' (25°C) en MPa | |
| Densité | 0.97 |

### 3- Essais de calandrage

Les essais de calandrage ont été réalisés à des températures comprises entre 120 et 200°C.

| Température des cylindres | Vitesse des cylindres | Homogénéité de la matière (transparence) | Aspect de la bande calandrée | Remarques |
|---|---|---|---|---|
| 120°C | AV 20 tr/mn | mauvaise | Peau de requin | |
| | AR - 20 tr/mn | | | |
| 140 | | moyenne | idem | |
| 160 | | bonne | bel aspect | |
| 180 | | bonne | Léger jaunissement de la masse | |
| 200 | | bonne | Jaunissement de la masse | Le produit colle au métal (rouleau et couteaux) |

On observe qu'entre 120 et 140°C, le produit n'a pas un bel aspect et qu'il reste opaque signe d'une mauvaise homogénéité du mélange, entre 180 et 200°C, le produit jaunit et colle au métal.

La meilleure température de travail avec ce type de polymère se situe au environ de 160°C, la matière ne s'oxyde pas et n'adhère pas au cylindre de la calandre.

### Exemple 9 (Câbles)

On utilise du Lotader 3410 greffé soit par un PA 6 mono NH2 comme dans l'exemple 7 soit greffé par un coPA 6/12 de caracteristiques suivantes:

| | Ratio en poids PA6/PA12 | Point de fusion °C |
|---|---|---|
| PA6/12 mono NH2 | 40 / 60 | 133 |

Caractéristiques des autres constituants

| Désignation | Point de fusion °C | IF 190°C/2.16 kg | Résistance à la rupture en MPa | Allongement à la rupture en % |
|---|---|---|---|---|
| | | Melt index | | |
| EVA 2803 | 75 | 3-45 | 33 | 700 - 1000 |
| copolymère éthylène acétate de vinyle | | | | |
| LOTRYL 30BA02 | 78 | 2 | 6 | 850 |
| Lotader 3200 | | | | |

Le Lotader 3200 est un terpolymere à 9% en poids d'acrylate de butyle et 2% d'anhydride maleique

### Caractéristiques de la charge utilisée

La charge utilisée pour cette étude est l'hydroxyde de magnésium Mg(OH)2 « Magnifin H10 ». Cette charge présente une stabilité thermique élevée, et peut ètre utilisée jusqu'à 340°C, avec libération d'eau à une température de 350°C.

### II.6) Composition des essais (valeurs théoriques)

| Désignation des produits | Formule de référence | Essai 1 | Essai 2 | Essai 3 |
|---|---|---|---|---|
| EVA 28 -03 | 16.65 % | | 16.2 | |
| LOTADER 3200 | 11.0 | | | |
| Clearflex VLDPE | 9.1 | 8.1 | 11.1 | |
| LOTADER greffé PA6 | | 10.7 | 10.7 | 12 |
| LOTADER greffé PA6/12 | | | | |
| LOTRYL 30BA02 | | 24.9 | | 28 |
| Mg(OH)₂ Magnifin H10 | 63 | 56.1 | 61.7 | 60 |
| Santonox R | 0.25 | 0.2 | | |
| Irganox B 225 | | | 0.3 | |

### Evaluation des propriétés (thermo)mécaniques des compounds :

### A) Propriétés thermomécaniques des compounds

### Résistance au fluage (méthode interne).

Cette propriété est évaluée par une mesure de tenue au fluage à 180,et 200°C sous différentes charges. Des éprouvettes IFC (institut française du caoutchouc) sont découpées dans des plaques de 2 mm d'épaisseur préparées par calandrage et compression. L'éprouvette doit tenir sous charge pendant au moins 20mn

| | référence | essai 1 | Essai 2 | essai 3 | essai 4 | essai 5 |
|---|---|---|---|---|---|---|
| T(°C)de compression | 170°C | 250°C | 250°C | 170°C | 250°C | 250°C |

### B) Propriétés mécaniques des compounds

Les propriétés mécaniques sont évaluées par la mesure de la contrainte et de l'allongement à la rupture (haltères ISO 527, vitesse 100mm /mn).

### C) Taux de cendres à 600°C

Les taux de cendres sont réalisés au LEM sur appareil TXG CEM 300.

### III) Résultats des évaluations des compounds

### II.1) Propriétés mécaniques et thermomécaniques

| Référence | Taux de charge visé | Contrainte à la rupture en MPa | Allongement à la rupture en % | Fluage à 180°C sous 0 5 bar | Fluage à 180°C sous 1 bar |
|---|---|---|---|---|---|
| Réference | 60 | 13.6 | 143 | Casse à 45 s | Casse à 30 s |
| essai 1 | 60 | 10.5 | 52.7 | 20 mn Allgt 5 % | >20 mn Allgt-5% |
| essai 2 | 60 | 12.5 | 150 | >20 mn Allgt 5% | Casse à 4 mn |
| essai 3 | 60 | 10.4 | 40 | >20 mn Allqt 5% | Casse à 5 |

### Exemple 10 (Slush molding)

On a utilisé le LOTADER 7500 greffé à 20% de PA11 mono NH2 de Mn=2500 g/mol.

Le Lotryl 35 BA 40 est un copolymère éthylène acrylate de butyle à 35 % en poids d'acrylate de butyle et de MFI 40 (190°C - 2,16 kg).

Les produits ont été cryobroyés après extrusion.

| | Témoin | essai 1 | essai 2 | essai 3 | essai 4 |
|---|---|---|---|---|---|
| composition en poids | PVC | 50% 7500-11 | 75%7500-11 | 50%7500-11 | 100 % |
| | | 35% 30BA02 | 25% 35BA40 | 50%35BA40 | 7500-11 |
| | | 15% 35BA40 | | | |
| contrainte à la rupture (MPa) | 16 | 9,2 | 6,8 | 4,5 | 10 |
| allongement à la rupture (%) | 250 | 500 | 250 | 225 | 300 |
| Shore A | <85 | 84 | 89 | 82 | 89 |
| Shore D | <25 | 25 | 29 | 24 | 35 |
| MFI 230°C-2,16kg (g/10min) | >40 | 25 | 61 | 69 | 70 |
| Fluage 120 °C/0,5 bar-15 min (%) | 20 | 1 | 0 | 6 | 0 |

Les produits ont été fabriqués par extrusion extrusion sur une machine Leistritz®
7500-11 désigne le Lotader 7500 greffé PA 11
30 BA 02, 35 BA 40 désignent des Lotryl (copolymères éthylène acrylate d'alkyle)

## Revendications

1. Mélange comprenant en poids, le total étant 100% :
➢ 1 à 100 % d'un copolymère greffé à blocs polyamide constitué d'un tronc en polyoléfine choisi parmi les copolymères éthylène-anhydride maléique et éthylène - (méth)acrylate d'alkyle - anhydride maléique et d'en moyenne au moins un greffon en polyamide dans lequel:
• les greffons sont attachés au tronc par les restes d'un monomère insaturé (X) ayant une fonction capable de réagir avec un polyamide à extrémité amine,
• les restes du monomère insaturé (X) sont fixés sur le tronc par copolymérisation depuis sa double liaison,
➢ 99 à 0 % d'une polyoléfine souple de module élastique en flexion inférieure à 150 MPa à 23°C et présentant un point de fusion cristalline compris entre 60°C et 100°C,
**caractérisé en ce que** :
• (X) est l'anhydride maléique ;
• la masse molaire des greffons est comprise entre 2000 et 4000 g/mole ;
• il y a en moyenne de 1,3 à 10 moles de X attachées sur le tronc en polyoléfine.

2. Mélange selon la revendication 1 dans lequel il y a en moyenne de 1,3 à 7 moles de X attachées sur le tronc en polyoléfine.

3. Mélange selon l'une des revendications précédentes dans lequel l'indice de viscosité (MFI - 190°C - 2,16 kg) du copolymère éthylène-anhydride maléique ou éthylène - (méth)acrylate d'alkyle - anhydride maléique est compris entre 5 et 100, sa température de fusion est comprise entre 60 et 100°C et ce copolymère comprend de 0,2 à 10 % en poids d'anhydride maléique et de 0 à 40 % en poids de (méth)acrylate d'alkyle.

4. Mélange selon l'une quelconque des revendications précédentes dans lequel les greffons sont des homopolymères constitués de restes de caprolactame, d'acide amino-11-undecanoïque ou de dodecalactame ou des copolyamides constitués de restes choisis parmi au moins deux des trois monomères précédents.

5. Mélange selon l'une quelconque des revendications précédentes dans lequel la proportion en poids de copolymère greffé à blocs polyamides est de 5 à 50% pour respectivement 95 à 50% de polyoléfine souple.

6. Adhésif constitué essentiellement d'un mélange selon l'une quelconque des revendications 1 à 5.

7. Adhésif selon la revendication 6 **caractérisé en ce qu'**il est sous forme de poudre.

8. Film constitué d'un mélange selon l'une quelconque des revendications 1 à 5.

9. Bâche ou géomembrane constituée d'au moins une couche d'un mélange selon l'une quelconque des revendications 1 à 5 associée à un support.

10. Produit obtenu par calandrage d'un mélange selon l'une quelconque des revendications 1 à 5.

11. Câbles électriques ou de telecommunications comprenant une couche de protection à base d'un mélange selon l'une quelconque des revendications 1 à 5.

## Patentansprüche

1. Mischung, enthaltend, bezogen auf das Gewicht, wobei sich die Summe auf 100% beläuft:
➢ 1 bis 100% eines mit Polyamidblöcken gepfropften Copolymers, das aus einer Hauptkette aus Polyolefin, das aus Ethylen-Maleinsäureanhydrid- und Ethylen-Alkyl(meth)acrylat-Maleinsäureanhydrid-Copolymeren ausgewählt ist, und durchschnittlich mindestens einem Polyamidpfropfanteil besteht, wobei:
• die Pfropfanteile über Reste eines ungesättigten Monomers (X) mit einer Funktion, die mit einem Polyamid mit einer Aminendgruppe reagieren kann, an die Hauptkette gebunden sind,
• die Reste des ungesättigten Monomers (X) durch Copolymerisation über seine Doppelbindung an der Hauptkette fixiert sind,
➢ 99 bis 0% eines flexiblen Polyolefins mit einem Biegeelastizitätsmodul von weniger als 150 MPa bei 23°C und einem Kristallschmelzpunkt zwischen 60°C und 100°C,
**dadurch gekennzeichnet, dass**:
• (x) Maleinsäureanhydrid ist;
• die Molmasse der Pfropfanteile zwischen 2000 und 4000 g/mol liegt;
• durchschnittlich 1,3 bis 10 mol X an die Polyolefin-Hauptkette gebunden sind.

2. Mischung nach Anspruch 1, wobei durchschnittlich 1,3 bis 7 mol X an die Polyolefin-Hauptkette gebunden sind.

3. Mischung nach einem der vorhergehenden Ansprüche, wobei der Schmelzflussindex (MFI - 190°C - 2,16 kg) des Ethylen-Maleinsäureanhydrid- oder Ethylen-Alkyl(meth)acrylat- Maleinsäureanhydrid-Copolymers zwischen 5 und 100 liegt, sein Schmelzpunkt zwischen 60 und 100°C liegt und dieses Copolymer 0,2 bis 10 Gew.-% Maleinsäureanhydrid und 0 bis 40 Gew.-% Alkyl(meth)acrylat umfasst.

4. Mischung nach einem der vorhergehenden Ansprüche, wobei es sich bei den Pfropfanteilen um Homopolymere, die aus Caprolactam-, 11-Aminoundecansäure- oder Dodecalactamresten bestehen, oder Copolyamide, die aus Resten, die unter mindestens zwei der drei vorstehend genannten Monomere ausgewählt sind, bestehen, handelt.

5. Mischung nach einem der vorhergehenden Ansprüche, wobei der Gewichtsanteil an mit Polyamidblöcken gepfropftem Copolymer 5 bis 50% auf respektive 95 bis 50% flexibles Polyolefin beträgt.

6. Klebstoff, der im wesentlichen aus einer Mischung nach einem der Ansprüche 1 bis 5 besteht.

7. Klebstoff nach Anspruch 6, **dadurch gekennzeichnet, daß** er in Pulverform vorliegt.

8. Film, bestehend aus einer Mischung nach einem der Ansprüche 1 bis 5.

9. Plane oder Geomembran, bestehend aus mindestens einer Schicht einer Mischung nach einem der Ansprüche 1 bis 5 in Kombination mit einem Träger.

10. Produkt, erhalten durch Kalandrieren einer Mischung nach einem der Ansprüche 1 bis 5.

11. Elektro- oder Telekommunikationskabel, enthaltend eine Schutzschicht auf Basis einer Mischung nach einem der Ansprüche 1 bis 5.

## Claims

1. Blend comprising, by weight, the total being 100%:
➢ 1 to 100% of a polyamide-block graft copolymer consisting of a polyolefin backbone chosen from ethylene/maleic anhydride and ethylene/alkyl (meth)acrylate/maleic anhydride copolymers and on average at least one polyamide graft, in which copolymer:
• the grafts are attached to the backbone by the residues of an unsaturated monomer (X) having a functional group capable of reacting with an amine-terminated polyamide,
• the residues of the unsaturated monomer (X) are attached to the backbone by copolymerization from its double bond;
➢ 99 to 0% of a flexible polyolefin have an elastic flexural modulus of less than 150 MPa at 23°C and a crystalline melting point between 60°C and 100°C **characterized in that**:
• (x) is maleic anhydride;
• the molar mass of the grafts is between 2000 and 4000 g/mol;
• there are on average from 1.3 to 10 mol of X attached to the polyolefin backbone.

2. Blend according to Claim 1, in which there are on average from 1.3 to 7 mol of X attached to the polyolefin backbone.

3. Blend according to one of the preceding claims, in which the MFI (melt flow index) at 190°C/2.16 kg of the ethylene/maleic anhydride or ethylene/alkyl (meth)acrylate/maleic anhydride copolymer is between 5 and 100, its melting point is between 60 and 100°C and this copolymer comprises from 0.2 to 10% by weight maleic anhydride and 0 to 40% by weight alkyl (meth)acrylate.

4. Blend according to any one of the preceding claims, in which the grafts are homopolymers consisting of caprolactam residues, 11-aminoundecanoic acid residues or dodecalactam residues or of copolyamides consisting of residues chosen from at least two of the three above monomers.

5. Blend according to any one of the preceding claims, in which the proportion by weight of polyamide-block graft copolymer is 5 to 50% per 95 to 50% of flexible polyolefin, respectively.

6. Adhesive, essentially consisting of a blend according to any one of Claims 1 to 5.

7. Adhesive according to Claim 6, **characterized in that** it is in powder form.

8. Film, consisting of a blend according to any one of Claims 1 to 5.

9. Tarpaulin or geomembrane, consisting of at least one layer of a blend according to any one of Claims 1 to 5 associated with a support.

10. Product obtained by calendering a blend according to any one of Claims 1 to 5.

11. Power cable or telecommunications cable, comprising a protective layer based on a blend according to any one of Claims 1 to 5.
